# EUROPÄISCHE PATENTSCHRIFT

(11) **EP 1 012 960 B1**
(45) Veröffentlichungstag und Bekanntmachung des Hinweises auf die Patenterteilung: **30.11.2005**
(21) Anmeldenummer: 98951378.3
(22) Anmeldetag: 10.09.1998
(51) Int. Cl.: H02P 7/62, H02K 11/00, H02H 7/08

(54) **DREHSTROMMOTOR**
THREE-PHASE MOTOR
MOTEUR TRIPHASE

(30) Priorität: 10.09.1997 DE 19739780
(43) Veröffentlichungstag der Anmeldung: 28.06.2000
(73) Patentinhaber: Sew-Eurodrive GmbH & Co. KG, 76646 Bruchsal (DE)
(72) Erfinder: ROTH-STIELOW, Jörg, D-75015 Bretten (DE); SCHMIDT, Josef, D-76676 Graben-Neudorf (DE)
(74) Vertreter: Bohnenberger, Johannes
(86) Internationale Anmeldenummer: PCT/EP1998/005786
(87) Internationale Veröffentlichungsnummer: WO 1999/013565

(56) Entgegenhaltungen:
- EP-A- 0 456 169
- DE-B- 1 220 042
- US-A- 4 016 459
- US-A- 5 406 186
- SHARAF A M ET AL: "AN EFFICIENT VARIABLE SPEED DRIVE SCHEME FOR SQUIRREL CAGE INDUCTION MOTORS USING STATOR NEUTRAL SWITCHING" 5. September 1993 , PROCEEDINGS OF IEEE-ATHENS POWER TECH CONFERENCE, PAGE(S) 826 - 830 XP000645767 siehe Abbildung 1

## Beschreibung

Die Erfindung betrifft einen Drehstrommotor zum Betreiben an einem Drehstromnetz.

Drehstrommotoren mit drei Wicklungssträngen oder drei Gruppen von Wicklungssträngen zur Bildung einer Wicklung werden üblicherweise ein- und ausschaltbar an Drehstromnetzen betrieben. Dazu ist es bekannt, zwischen dem Drehstromnetz und netzseitigen Anschlußklemmen des Drehstrommotors zwei- oder dreiphasige elektromechanische Schalter, Relais oder Schütze anzuordnen und mit diesen die elektrische Verbindung zwischen dem DrehStromnetz und dem Drehstrommotor herzustellen bzw. zu unterbrechen. Anstelle von elektromechanischen Schaltelementen werden in zunehmendem Maß auch elektronische Schaltelemente eingesetzt. Dadurch wird erreicht, daß kein Kontaktverschleiß mehr auftritt. Die elektronischen Schaltelemente lassen einen über Steueranschlüsse steuerbaren Stromfluß zu. wie auch bei den elektromechanischen Schaltelementen werden mindestens zwei elektronische Schaltelemente benötigt. Üblicherweise kommen als elektronische Schaltelemente Triacs, Alternistoren oder eine Kombination aus je zwei antiparallel geschalteten Thyristoren mit den jeweils zugehörigen Ansteuerschaltungen zum Einsatz.

Zur Verminderung von Netz- und Funkstörungen durch das Ein- und Ausschalten des Drehstrommotors und zum Schutz der elektronischen Schaltelemente sind zusätzliche Schaltungen wie z. B. RC-Glieder, Freilaufdioden und Varistoren in die Schaltung eingefügt.

Sowohl die elektromechanischen Schalter als auch die elektronischen Schaltelemente werden üblicherweise räumlich getrennt von dem Drehstrommotor in Schaltschränken oder Schaltkästen angeordnet. Hierdurch wird zusätzlich zum Raumbedarf des Drehstrommotors weiterer Raum benötigt. Außerdem wird für die Schaltschränke oder Schaltkästen zusätzliches Material benötigt.

Weiterhin ist es bekannt, für jede Netzphase in der Versorgungszuleitung ein mechanisches Relais (Schaltschütze) oder auch auf den Sternpunkt schaltende Relais vorzusehen. Der hierbei entstehende Verkabelungsaufwand wie auch der entstehende Raumbedarf sind hierbei erheblich.

Bei der Verwendung von elektronischen Schaltelementen zum Einund Ausschalten des Drehstrommotors wird insgesamt eine große Anzahl von Schaltelementen und Peripherieelementen verwendet. Hierdurch entstehen sowohl bei der Herstellung der Schaltungsanordnungen als auch bei der Wartung erhebliche Kosten.

US-A-5 406 186 offenbart einen Motor mit den Merkmalen des Oberbegriffs des Anspruchs 1.

Aufgabe der Erfindung ist es, einen Drehstrommotor mit elektronischen Schaltelementen zum Ein- und Ausschalten anzugeben, wobei der gesamte Raumbedarf und Bauaufwand gegenüber den bekannten Drehstrommotoren reduziert und die Betriebssicherheit verbessert sind.

Diese Aufgabe wird durch einen Drehstrommotor mit den Merkmalen des Patentanspruchs 1 gelöst. Weiterbildungen sind Gegenstand der abhängigen Ansprüche.

Der erfindungsgemäße Drehstrommotor zum Betreiben an einem Drehstromnetz weist drei Wicklungsstränge oder Gruppen von Wicklungssträngen zur Bildung einer wicklung in Sternschaltung auf. Hierbei sind Sternpunktanschlußenden der Wicklungsstränge außerhalb der Wicklung zugänglich. Weiterhin weist der Drehstrommotor einen elektronischen Schalter auf, der so ausgebildet und über Schalteranschlußklemmen mit den Sternpunktanschlußenden verbunden ist, daß diese bei einem Einschaltvorgang miteinander elektrisch verbindbar und bei einem Ausschaltvorgang voneinander trennbar sind. Zum Steuern des vorzugsweise Thyristoren umfassenden elektronischen Schalters ist eine Steuerschaltung mit dem elektronischen Schalter verbunden.

Vorzugsweise sind sowohl der elektronische Schalter als auch die Steuerschaltung in einem Klemmkasten des Drehstrommotors angeordnet, in dem sich die Sternpunktanschlußenden der Wicklungsstränge befinden. In jedem Fall ist jedoch der Raumbedarf insgesamt für den Drehstrommotor und die mit ihm verbundene Schaltungsanordnung zum Ein- und Ausschalten geringer als bei vorbekannten Drehstrommotoren. Auch wird durch die Sternpunktschaltung die Anzahl der elektronischen Bauteile reduziert. Desweiteren werden mehrphasige Leitungsverbindungen zwischen einem Drehstrommotor und einem Schaltschrank oder einem Schaltkasten eingespart.

Der Klemmenkasten ist aus einem gut wärmeleitenden Material vorzugsweise mit äußenliegenden Kühlrippen gefertig, so daß die im elektronischen Schalter entstehende Wärme über den Klemmenkasten nach außen abgegeben werden kann. Darüber hinaus ist der Klemmenkasten über eine Dichtung am Gehäuse des Drehstrommotors so befestigt, daß der Wärmeübergangswiderstand zwischen Gehäuse und Klemmenkasten gering ist. Die Temperatur des Klemmenkastens ist darum etwas verschieden von derjenigen des Motorgehäuses.

Der elektronische Schalter ist zusammen mit dem Temperaturfühler, gegebenenfalls auch zusammen mit der elektronischen Steuerschaltung als Hybridschaltung ausgebildet, wobei die Bauelemente auf einem Keramikmontagesubstrat angebracht und direkt auf einer aus gut wärmeleitendem Material, insbesondere aus Kupfer bestehenden Hybridplatine so montiert sind, daß die vom elektronischen Schalter abgegebene Wärme mit einem äußerst geringen Wärmewiderstand zur Hybridplatine und von dieser praktisch wärmewiderstandsfrei an den Klemmenkasten abgegeben wird. Der Montageort des Temperaturfühlers relativ zum elektronischen Schalter ist derart, daß die Temperatur der Kupfer-Hybridplatine derjenigen des Temperaturfühlers entspricht und ein gewisser Rest-Wärmewiderstand zwischen dem elektronischen Schalter und dem Temperaturfühler besteht.

Vorzugsweise ist mindestens ein weiterer Temperaturfühler vorgesehen, der die Temperatur der Wicklung mißt und hierzu in dieser montiert ist. Er ist mit der Steuerschaltung derart verbunden, daß der elektronische Schalter nur dann eingeschaltet werden kann, wenn auch die Wicklungstemperatur nicht oberhalb eines voreingestellten Wertes liegt. Dadurch ist in einfacher Weise auch ein Schutz der Motorwicklung gegeben.

Dadurch, daß die Temperatur des Motorgehäuses auch einen Einfluß auf die Temperatur des Klemmenkastens hat, wird insgesamt in einer einfachen Weise eine sehr sichere Temperaturüberwachung des Drehstrommotors gewährleistet. Durch diese indirekte Überwachung der Motortemperatur über dessen Gehäuse kann unter Umständen auch der weitere Temperaturfühler in der Wicklung entfallen.

Die Steuerschaltung weist einen Ausgang auf, der den Betriebszustand als Binärzustand meldet. Dann, wenn die Temperatur des Motors oder die Temperatur der Hybridplatine (des elektronischen Schalters) einen kritischen Wert überschreitet oder auch dann, wenn die Spannungsversorgung für die Elektronik gestört bzw. nicht vorhanden ist, wird ein anderer Binärzustand ausgegeben als in dem Fall, in welchem alle Betriebsparameter ordnungsgemäße Werte aufweisen. Dieses Signal kann auch zu anderen bzw. weiteren Zwecken, z.B. zur Ansteuerung eines Alarmsignals verwendet werden.

Bevorzugtermaßen ist die Steuerschaltung mit einer Meßeinrichtung verbunden, die mit den Schalteranschlußklemmen verbunden ist und die dort anliegende Sternpunkt-Spannung abgreift, wobei die Steuerschaltung derart ausgebildet ist, daß die Ein- und -Ausschaltvorgänge in Abhängigkeit von den Sternpunkt-Spannungen steuerbar sind. Auf diese Weise kann die Sicherheit beim Betrieb des Drehstrommotors, insbesondere für die elektronischen Bauteile, erhöht werden, da die Höhe der Sternpunkt-Spannungen bei der Steuerung des elektronischen Schalters berücksichtigt werden kann.

Bei einer Weiterbildung ist die Steuerschaltung derart ausgebildet, daß auf ein externes Einschaltsignal hin der elektronische Schalter dann eingeschaltet wird, wenn gleichzeitig eine der Sternpunkt-Spannungen eine erste Schwellenspannung überschreitet, die höher ist als eine Restspannung zwischen den Schalteranschlußklemmen im eingeschalteten Zustand des Schalters, jedoch wesentlich niedriger ist als die Spannung des Drehstromnetzes. Insbesondere beträgt die erste Schwellenspannung 2-5%, vorzugsweise 3% der Spannung des Drehstromnetzes.

Bevorzugtermaßen ist die Steuerschaltung, insbesondere zum Schutz gegen Überspannungen, derart ausgebildet, daß der Schalter dann eingeschaltet bzw. ausgeschaltet wird, wenn eine der Sternpunkt-Spannungen eine zweiten Schwellenspannung überschreitet bzw. unterschreitet, die höher als die Spannung des Drehstromnetzes, jedoch niedriger als eine Schädigungsspannung ist, oberhalb derer Bauteile des Schalters oder der Steuerschaltung geschädigt oder zerstört werden. Insbesondere wird der Schalter bei Überschreiten der zweiten Schwellenspannung unabhängig davon eingeschaltet, ob ein externes Einschaltsignal das Einschalten befiehlt oder nicht. Die Messung der Sternpunkt-Spannungen kann also mehrfach genutzt werden, wodurch insbesondere elektronische Bauteile, wie z. B. Zenerdioden oder Varistoren zur Sicherung elektronischer Bauteile gegen Beschädigung nicht erforderlich sind.

Bei der Erfindung kommt die raum- und bauteilesparende Eigenschaft des erfindungsgemäßen Drehstrommotors besonders zum Tragen, da lange Meßleitungen insbesondere zwischen temperaturempfindlichen Bauteilen (Wicklung) des Drehstrommotors und einem entfernt angeordneten Schaltkasten oder Schaltschrank entfallen. Messung und Auswertung finden unmittelbar in der Nähe der temperaturempfindlichen Bauteile statt.

Besonders bevorzugt wird eine Ausführungsform, bei der der elektronische Schalter eine Energieversorgungseinrichtung aufweist, welche den elektronischen Schalter mit Schalt- oder Zündenergie versorgt und die derart ausgebildet und den elektronischen Schalter überbrückend angeordnet ist, daß die im eingeschalteten Zustand des elektronischen Schalters über dessen Anschlußklemmen anliegende Restspannung als Versorgungsspannung für die Energieversorgungseinrichtung verwendbar ist.

Nachfolgend werden zur Erläuterung der Erfindung Ausführungsbeispiele anhand von Abbildungen beschrieben. Die Erfindung ist jedoch nicht auf diese Ausführungsbeispiele beschränkt. Hierbei zeigen:
- Fig. 1: das Prinzipschaltbild eines Ausführungsbeispiels der Erfindung,
- Fig. 2: eine Schaltungsanordnung mit einem elektronischen Schalter zum Ein- und Ausschalten eines Drehstrommotors,
- Fig. 3: eine Schaltungsanordnung mit einem weiteren elektronischen-Schalter zum Ein- und Ausschalten eines Elektrommotors,
- Fig. 4: eine Variante eines Teils der Schaltungsanordnung nach Fig. 2,
- Fig. 5: eine Variante der Schaltungsanordnung nach Fig. 3,
- Fig. 6: eine perspektive Darstellung eines Klemmenkastens mit darin montierter Hybridschaltung und
- Fig. 7: eine schematische Seitenansicht der Hybridschaltung zur Erläuterung deren prinzipiellen Aufbaus.

In der nachfolgenden Beschreibung werden für gleiche und gleichwirkende Teile die selben Bezugsziffern verwendet.

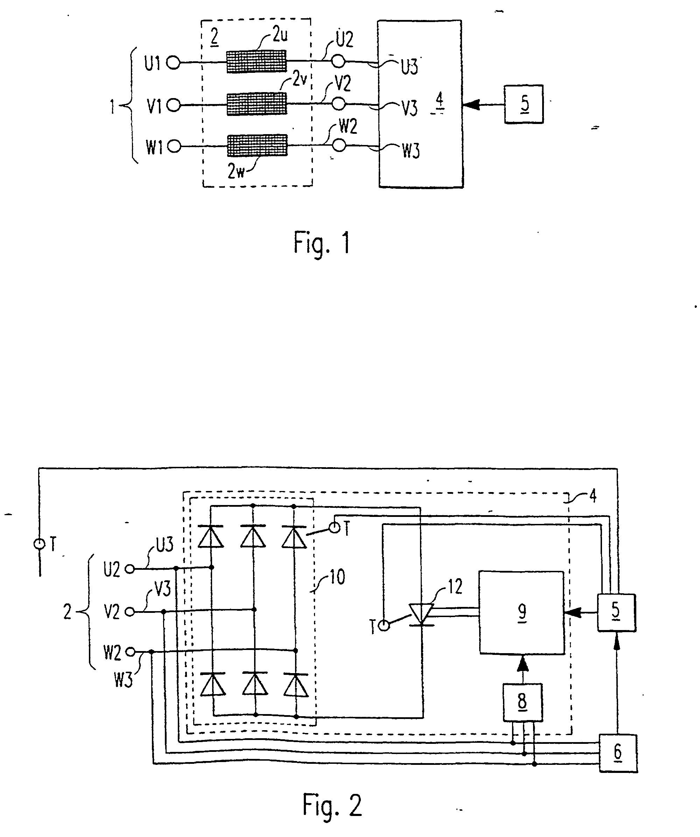

Fig. 1 zeigt das Prinzipschaltbild eines Ausführungsbeispiels der Erfindung. Hierin bedeuten 1 ein schematisch mit einer gewinkelten Klammer angedeutetes Drehstromnetz, 2 eine dreisträngige Wicklung eines Drehstrommotors, der an den Netzanschlußklemmen U1, V1 und W1 dreiphasig an das Drehstromnetz 1 angeschlossen ist, 2u, 2v und 2w drei Wicklungsstränge, die die Wicklung 2 des Drehstrommotors bilden und an ihren den Netzanschlußklemmen U1, V1 bzw. W1 abgewandten Enden Sternpunkt-Anschlußenden U2, V2 bzw. W2 aufweisen, U3, V3 und W3 Schalteranschlußklemmen eines elektronischen Schalters 4, die jeweils mit einem der Sternpunkt-Anschlußenden U2, V2 und W2 verbunden sind, und 5 eine Steuerschaltung, die zum Steuern des elektronischen Schalters 4 mit diesem verbunden ist.

Im folgenden wird ein Beispiel für den Betrieb der Schaltungsanordnung gemäß Fig. 1 gegeben. Zunächst ist der elektronische Schalter 4 in einem ausgeschalteten Zustand, d. h. die Schalteranschlußklemmen U3, V3, W3 des Schalters 4 sind nicht derart leitend miteinander verbunden, daß ein für den Betrieb des Drehstrommotors ausreichender Stromfluß möglich ist. Ausgehend von diesem Zustand wird der Steuerschaltung 5 ein Kommandosignal gegeben, so daß die Steuerschaltung 5 dem Schalter 4 ein Steuersignal gibt, das den Schalter 4 in einen leitenden Zustand versetzt. In diesem leitenden Zustand sind die Schalteranschlußklemmen U3, V3, W3 derart leitend miteinander verbunden, daß ein Betrieb des Drehstrommotors beginnt bzw. kontinuierlich fortgesetzt wird. Auf ein weiteres Kommandosignal hin gibt die Steuerschaltung 5 dem elektronischen Schalter 4 ein Steuersignal, so daß der Schalter 4 wieder in einen nicht-leitenden Zustand übergeht. Alternativ hierzu bleibt das erste Steuersignal, das den Schalter 4 in den leitenden Zustand versetzt, so lange bestehen, bis das zweite Kommandosignal gegeben wird. Auf das zweite Kommandosignal hin wird die Übermittlung des Steuersignals dann abgebrochen, so daß der Schalter 4 wieder in den nicht-leitenden Zustand übergeht.

Fig. 2 zeigt beispielhaft eine Ausführungsform einer Schaltungsanordnung, die dem rechten Teil des Prinzipschaltbilds nach Fig. 1 entspricht. Mit einer gewinkelten Klammer und dem Bezugszeichen 2 sind schematisch der linke Teil der Fig. 1 angedeutet. Innerhalb eines von einem mit einer unterbrochenen Linie umrahmten Rechteck ist der Schalter 4 dargestellt. Er weist eine ungesteuerte Gleichrichterbrücke 10 mit insgesamt 6 Halbleiterdioden auf, die jeweils paarweise gleichgerichtet auf jeweils einem Leitungsstrang angeordnet sind. Jeweils der Strangabschnitt zwischen einem Paar der Halbleiterdioden ist mit einer der Schalteranschlußklemmen U3, V3, W3 verbunden. Die einander entsprechenden Enden der drei Leitungsstränge sind jeweils miteinander kurzgeschlossen. Die so gebildete ungesteuerte Gleichrichterbrücke 10 weist somit zwei Enden auf, die über ein ein- und ausschaltbares elektronisches Ventil 12 miteinander verbunden sind. Das Ventil 12 ist vorzugsweise ein Schalttransistor, der so geschaltet ist, daß in seinem leitenden Zustand ein Stromfluß in Dioden-Durchlaßrichtung der Gleichrichterbrücke 10 möglich ist. Das ein- und ausschaltbare elektronische Ventil 12 ist mit einer Ansteuerungseinheit 9 verbunden, die wiederum mit einer Energieversorungseinrichtung 8 verbunden ist, welche den elektronischen Schalter 4 mit Schaltenergie versorgt.

Die Energieversorungseinrichtung 8 ist jeweils separat mit den drei Schalteranschlußklemmen U3, V3, W3 verbunden. Weiterhin ist mit den Schalteranschlußklemmen U3, V3, W3 eine Meßeinrichtung 6 verbunden, die wiederum mit der Steuerschaltung 5 verbunden ist. Zum Übertragen des Steuersignals ist die Steuerschaltung 5 mit der Ansteuerungseinheit 9 verbunden.

Zur Erfassung von Temperaturen temperaturempfindlicher Bauteile weist die Schaltungsanordnung nach Fig. 2 insgesamt 3 Temperaturfühler T auf. Auf der linken Seite der Fig. 2 ist ein Temperaturfühler T erkennbar, der eine Temperatur an einer überhitzungsgefährdeten Stelle der Wicklung 2 mißt. Ein weiterer Temperaturfühler T mißt die Temperatur der ungesteuerten Gleichrichterbrücke 10, die auf einem gut wärmeleitenden Träger installiert ist, um eine geeignete Kühlung zu gewährleisten. Der dritte Temperaturfühler T mißt die Temperatur des ein- und ausschaltbaren elektronischen Ventils 12. Alle 3 Temperaturfühler T sind über eine Meßleitung mit der Steuerschaltung 5 verbunden.

Die Funktionsweise der Schaltungsanordnung gemäß Fig. 2 ist folgende: Ausgehend von dem nicht-leitenden Zustand des elektronischen Schalters 4 wird auf ein Kommandosignal hin von der Steuerschaltung 5 ein Steuersignal an die Ansteuerungseinheit 9 gegeben, so daß das ventil 12 in den leitenden Zustand versetzt wird. Voraussetzung hierfür ist jedoch, daß keiner der Temperaturfühler T eine Temperatur mißt, die für das jeweilige temperaturempfindliche Bauteil gefährlich ist. Andernfalls ignoriert die Steuerschaltung 5 das Kommandosignal und gibt kein Steuersignal zum Einschalten des Ventils 12 an die Ansteuerungseinheit 9. Im leitenden Zustand des Ventils 12 sind die Enden der drei Leitungsstränge der Gleichrichterbrücke 10 leitend miteinander verbunden. In diesem Zustand ist der zugehörige Drehstrommotor in Betrieb. Auf ein weiteres Kommandosignal hin, oder bei Abbruch des ersten Kommandosignals, wird der Ansteuerungseinheit 9 von der Steuerschaltung 5 ein Steuersignal übermittelt, so daß das ventil 12 in den nicht-leitenden Zustand versetzt wird, mit der Folge, daß er Stromfluß zwischen den Enden der drei Leitungsstränge der Gleichrichterbrücke 10 unterbrochen wird. Als Energiequelle für diesen Schaltvorgang nutzt die Ansteuerungseinheit 9 von der Energieversorgungseinrichtung 8 bereitgestellte Schaltenergie. Hierzu greift die Energieversorgungseinrichtung 8 eine oder mehrere zwischen den Schalteranschlußklemmen U3, V3, W3 anliegende Restspannungen ab. Aufgrund der Verwendung der Halbleiterdioden für die ungesteuerte Gleichrichterbrücke und des ein- und ausschaltbaren elektronischen Ventils 12, insbesondere eines Schalttransistors, bestehen solche Restspannungen auch während des Betriebs des Drehstrommotors. Für den Einschaltvorgang stehen, sofern das Drehstromnetz in Betrieb ist und angeschlossen ist, ohnehin Spannungen zwischen den Schalteranschlußklemmen U3, V3, W3 zur Verfügung.

Außer den bereits beschriebenen Betriebsweisen gibt es noch weitere Betriebsweisen. Zur Gewährleistung eines Überspannungsschutzes der Bauteile der Schaltungsanordnung gemäß Fig. 2 mißt die Meßeinrichtung 6 die Spannungen zwischen den Schalteranschlußklemmen U3, V3, W3 und übermittelt die Meßwerte und/oder ein den Meßwerten zugeordnetes Meßsignal der Steuerschaltung 5. Auf diese Weise kann die Steuerschaltung 5 eine für die Bauteile des elektronischen Schalters 4 gefährlich hohe Spannung erkennen und unabhängig von einem Kommandosignal das Ventil 12 über die Ansteuerungseinheit 9 in den elektrisch leitenden Zustand versetzen. So können sich kurzzeitige gefährliche Überspannungen abbauen. Hierbei wird der Anstieg des Kurzschlußstroms in dem elektronischen Schalter 4 durch die Induktivitäten der wicklungsstränge des Drehstrommotors gedämpft. Weiterhin wird ein Absinken der Überspannungen durch die Meßeinrichtung 6 gemessen und von der Steuerschaltung 5 erkannt, woraufhin die Ansteuerungseinheit 9 auf ein Steuersignal der Steuerschaltung 5 das Ventil 12 in den nicht-leitenden Zustand versetzt. Als Maß für das Ein- oder Ausschalten des elektronischen Schalters 4 zum Schutz gegen Überspannungen ist der Wert einer Schwellenspannung vorgegeben, die höher als die Spannung des Drehstromnetzes, jedoch niedriger als eine Schädigungsspannung ist, oberhalb derer Bauteile des Schalters 4 oder der Steuerschaltung 5 oder weiterer Bestandteile der Schaltungsanordnung geschädigt oder zerstört werden.

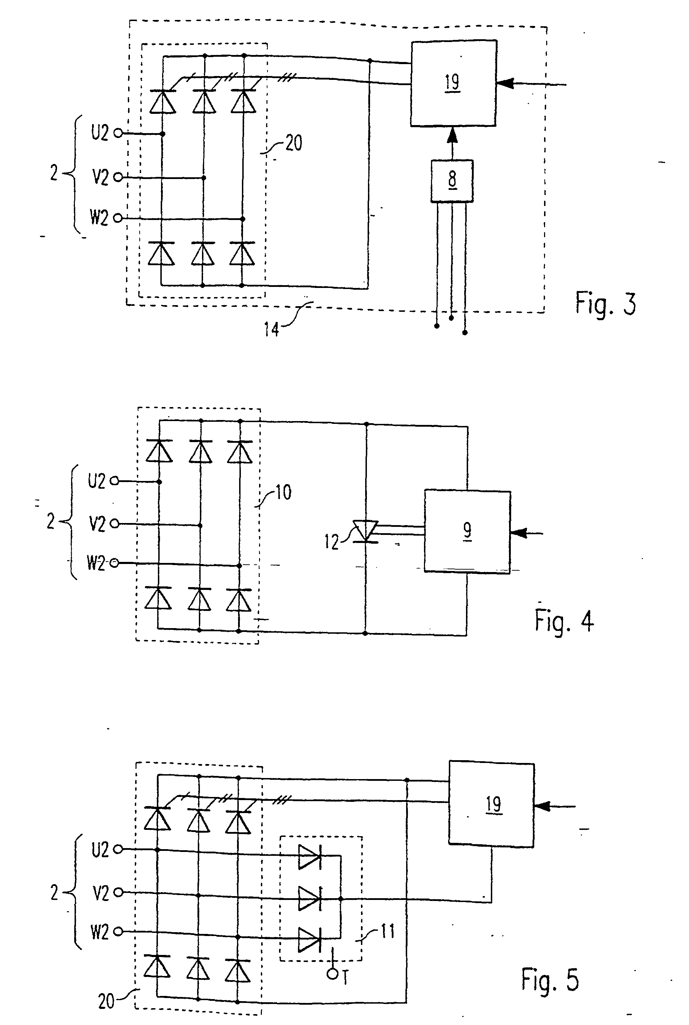

Fig. 3 zeigt ausschnitthaft eine der in Fig. 2 dargestellten Schaltungsanordnung entsprechende Schaltungsanordnung mit einem anderen elektronischen Schalter. Der elektronische Schalter 14 weist anstelle einer ungesteuerten Gleichrichterbrücke und eines elektronischen Ventils eine halbgesteuerte Gleichrichterbrücke 20 auf. Dementsprechend ist eine modifizierte Ansteuerurgseinheit 19 vorgesehen. Die halbgesteuerte Gleichrichterbrücke 20 ist ähnlich wie die ungesteuerte Gleichrichterbrücke 10 gemäß Fig. 2 aufgebaut, jedoch ist in jedem der drei Leitungsstränge ein Paar Halbleiterbauteile vorhanden, bestehend aus einer Halbleiterdiode und einem gleichgepolten Thyristor. Der Thyristor nimmt also jeweils die Stelle einer der Halbleiterdioden gemäß Fig. 2 ein. Im Fall der Fig. 3 liegen die.Thyristoren jeweils in technischer Stromflußrichtung gesehen stromabwärts der jeweiligen Halbleiterdiode desselben Leitungsstranges. Es ist jedoch auch möglich, die Thyristoren stromaufwärts der Halbleiterdioden anzuordnen.

Die Steueranschlüsse der drei Thyristoren sind über Steuerleitungen mit der Ansteuerungseinheit 19 verbunden. Die Ansteuerungseinheit 19 ist außerdem mit den Enden der drei Leitungsstränge der Gleichrichterbrücke 20 verbunden. Wie bei der Schaltungsanordnung gemäß Fig. 2 ist eine Energieversorgungseinheit 8 Bestandteil des elektronischen Schalters 14. Temperaturfühler, die Steuerschaltung, die Meßeinrichtung zur Messung von Spannungen, zwischen den Schalteranschlußklemmen des Schalters 4 und die zugehörigen Leitungsverbindungen sind in Fig. 3 nicht dargestellt.

Auf ein entsprechendes Kommandosignal hin gibt die Steuerschaltung ein Steuersignal an die Ansteuerungseinheit 19, woraufhin diese einen Zündimpuls an die drei Thyristoren gibt und die Thyristoren so in den elektrisch leitenden Zustand versetzt. Bevorzugt wird, daß dies jedoch nur dann geschieht, wenn zur Zeit des Eintreffens des Kommandosignals eine der Spannungen zwischen den Schalteranschlußklemmen des Schalters 4 einen Schwellenwert überschreitet, der zum einen größer ist als die Restspannung zwischen den Anschlußklemmen des Schalters 4 im elektrisch leitenden Zustand der Thyristoren, der zum anderen aber sehr viel kleiner ist als die Spannung des Drehstromnetzes. Vorzugsweise beträgt der Schwellwert etwa 3% der Spannung des Drehstromnetzes. Auf ein Kommandosignal zum Abschalten des Schalters 4 hin oder wenn eine zu hohe Temperatur eines temperaturempfindlichen Bauteils erfaßt wird, übermittelt die Steuerschaltung 5 ein Steuersignal an die Ansteuerungseinheit 19, woraufhin diese den Impuls zum Zünden der Thyristoren nicht mehr gibt, so daß diese beim nächstfolgenden Kommutierungszeitpunkt der halbgesteuerten Gleichrichterbrücke 20 in den nicht-leitenden Zustand versetzt werden. Bevorzugt wird, daß ein Einschalten der Thyristoren bzw. des Schalters 4 in den elektrisch leitenden Zustand auch bei Vorliegen eines Meßsignals erfolgt, das durch eine Überspannung an den Schalteranschlußklemmen des Schalters 4 ausgelöst wurde.

Fig. 4 zeigt ebenfalls ausschnitthaft eine Schaltungsanordnung, die wie in Fig. 2 gezeigt, um weitere Bauteile ergänzt sein kann. Die Schaltungsanordnung gemäß Fig. 4 entspricht im wesentlichen Teilen des elektronischen Schalters gemäß Fig. 2, jedoch weist die Ansteuerungseinheit 9 zwei weitere Leitungsverbindungen auf, so daß sie das Ventil 12 überbrückend mit den Enden der drei Leitungsstränge der Gleichrichterbrücke 10 verbunden ist. Alternativ hierzu kann eine der beiden zusätzlichen Leitungsverbindungen entfallen, wenn eine der zwei dargestellten Ansteuerungsverbindungen zwischen der Ansteuerungseinheit 9 und dem Ventil 12 mit einem Ende der Leitungsstränge der Gleichrichterbrücke 10 verbunden ist bzw. mit dem entsprechenden Anschluß des Ventils 12 verbunden ist.

Bevorzugtermaßen wird der Ansteuerungseinheit 9 über die zusätzlichen Leitungsverbindungen bzw. über eine zusätzliche Leitungsverbindung und eine Ansteuerungsverbindung eine über die Leitungsstränge der Gleichrichterbrücke 10 abfallende Restspannung zum Steuern des elektronischen Ventils 12 zugeleitet. Auf diese Weise kann eine Zündenergie zum Ansteuern des Ventils 12 bezogen werden.

Die in Fig. 5 gezeigte Schaltungsanordnung ist, entsprechend der in Fig. 4 gezeigten, eine Modifikation der Schaltungsanordnung nach Fig. 3. Hier ist zum Bereitstellen einer Zündenergie zum Zünden der Thyristoren ein Hilfsgleichrichter 11 vorgesehen, der drei Halbleiterdioden aufweist. Jede der drei Halbleiterdioden ist über eine gemeinsame Leitungsverbindung des Hilfsgleichrichters 11 mit der Ansteuerungseinheit 19 verbunden. Das jeweils andere Ende der Halbleiterdioden ist mit einer der Schalteranschlußklemmen des elektronischen Schalters verbunden. Auf diese Weise kann eine Schaltenergie zwischen den Schalteranschlußklemmen und-dem Thyristor-seitigen Ende der drei Leitungsstränge der Gleichrichterbrücke 20 abgegriffen werden. Es ist ebenfalls möglich, eine Schaltenergie zwischen den Schalteranschlußklemmen und dem Dioden-seitigen Ende abzugreifen, wenn eine Leitungsverbindung zwischen diesem Ende und der Ansteuerungseinheit 19 vorgesehen ist.

Entsprechend der in Fig. 2 gezeigten Schaltungsanordnung kann eine Einrichtung zur Temperaturüberwachung temperaturempfindlicher Bauteile vorgesehen sein. Dies ist beim Hilfsgleichrichter 11 mit einem Temperaturfühler T angedeutet.

Auch kann eine Einrichtung zum Schützen der Bauteile gegen Überspannungen vorgesehen sein. Beim Vorhandensein einer solchen Überspannung wird der elektronische Schalter durch Zünden der Thyristoren in einen elektrisch leitenden Zustand versetzt.

Drehstrommotoren, insbesondere bei Verwendung als Getriebemotoren, werden häufig mit einer elektromagnetisch betätigbaren, mechanischen Bremse kombiniert, die die an sich schon gute Steuerbarkeit der Drehstrommotoren noch verbessert. Bevorzugtermaßen wird zwischen den Anschlußklemmen von einer der drei Ständerwicklungen, also z. B. zwischen dem Netzanschlußende U1 und dem Sternpunktanschlußende U2 nach Fig. 1, eine Versorgungsspannung für eine solche elektromagnetisch betätigbare, mechanische Bremse abgegriffen. Bei Stromfluß durch die entsprechende wicklung, d. h. wenn der elektronische Schalter 4 in einem elektrisch leitenden Zustand ist, fällt an den Anschlußklemmen eine Spannung ab. Daher wird während des Betriebes des Drehstrommotors eine Erregerspule der Bremse mit Strom versorgt, so daß die Bremse gelüftet wird. Sobald der elektronische Schalter ausgeschaltet wird, bricht die Versorgungsspannung zusammen, so daß die Bremse einfällt und der Drehstrommotor festgehalten wird.

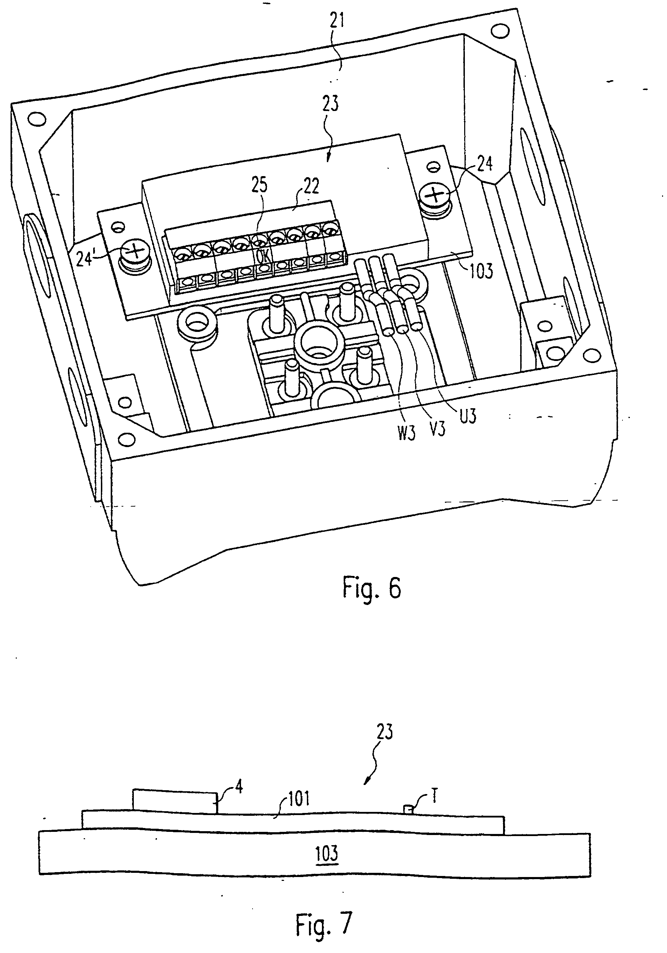

In Figur 6 ist ein Klemmenkasten 21 dargestellt, der über eine (nicht gezeigte) Dichtung auf dem Drehstrommotor (nicht gezeigt) montierbar ist. Der Klemmenkasten 21 besteht aus einem gut wärmeleitenden Material. Auf seinem Boden ist eine Hybridschaltung 23 montiert, welche die zur Steuerung wie oben beschrieben notwendige Elektronik enthält. Die Montage erfolgt hierbei derart, daß eine aus gut wärmeleitendem Material, vorzugsweise aus Kupfer bestehende Hybridplatine, welche die wärme der Halbleiterbauelemente, insbesondere des elektronischen Schalters 4 aufnimmt, flach auf dem Boden des Klemmenkastens 21 derart montiert ist, daß ein sehr geringer Wärmeübergangswiderstand zwischen der Hybridplatine 103 und dem Boden des Klemmenkastens 21 besteht. Die von den elektronischen Bauteilen erzeugte Wärme wird somit einerseits von der Platine 103 und den Montageschrauben 24, 24' direkt, andererseits von dem Klemmenkasten 21 an die Umgebung angegeben. Weiterhin wird auch Wärme über Anschlußdrähte U3, V3 und W3 an die Umgebung abgegeben, welche aus der Hybridschaltung 23 herausgeführt sind und die in hier nicht gezeigter Weise mit den Wicklungsenden wie oben beschrieben verbunden sind.

Auf der Hybridschaltung 23 ist eine Klemmleiste 22 angebracht, welche neben den eingangs beschriebenen Steuereingängen und der Spannungsversorgung einen "OK"-Ausgang 25 aufweist, der als Steuerausgang ein binäres Signal abgibt, welches die Betriebsbereitschaft anzeigt. Unter Betriebsbereitsschaft sei hier verstanden, daß sämtliche Parameter gegeben sind, die als Voraussetzung für das Einschalten des Drehstommotors vorliegen müssen, also insbesondere korrekte Temperaturbereiche aber auch Funktionsfähigkeit in Bezug auf Betriebsspannung und dergleichen. Über diesen Steuerausgang 25 kann eine Warneinrichtung bzw. Fernüberwachung betrieben werden.

Die in Figur 7 gezeigte Seitenansicht der Hybridschaltung 23 sollte ihren prinzipiellen Aufbau erläutern. Hierbei ist mit der Bezugsziffer 101 ein Keramik-Montageplättchen bezeichnet, auf welchem in an sich bekannter Weise der elektronische Schalter 4 und der Temperatursensor T montiert sind. Zwischen diesen beiden Bauteilen besteht ein gewisser Abstand derart, daß der Temperatursensor T die Temperatur der Kupfer-Platine 103 und nicht direkt die Temperatur des elektronischen Schalters 4 mißt. Dadurch wird eine korrekte Temperaturmessung des Gesamtbauteils ermöglicht.

### Bezugszeichenliste

- 1: Drehstromnetz
- 2: Wicklung
- 4: elektronischer Schalter
- 5: Steuerschaltung
- 6: Meßeinrichtung
- 8: Energieversorungseinrichtung
- 9: Ansteuerungseinheit
- 10: ungesteuerte Gleichrichterbrücke
- 11: Hilfsgleichrichter
- 12: ein- und ausschaltbares elektronisches Ventil
- 14: elektronischer Schalter
- 19: Ansteuerungseinheit
- 20: halbgesteuerte Gleichrichterbrücke
- 21: Klemmenkasten
- 22: Klemmenleiste
- 23: Hybridschaltung
- 24, 24': Befestingungsschraube
- 25: Steuerausgang
- 2u, 2v, 2w: Wicklungsstrang
- T: Temperaturfühler
- U1, V1, W1: Netzanschlußenden
- U2, V2, W2: Sternpunktanschlußenden
- U3, V3, W3: Schalteranschlußklemmen

## Patentansprüche

1. Drehstrommotor zum Betreiben an einem Drehstromnetz (1),
- mit drei Wicklungssträngen (2u, 2v, 2w) oder Gruppen von Wicklungssträngen zur Bildung einer Wicklung (2) in Sternschaltung, wobei Sternpunktanschlußenden (U2, V2, W2) der Wicklungsstränge (2u, 2v, 2w) außerhalb der Wicklung (2) zugänglich sind,
- mit einem elektronischen Schalter (4), der so ausgebildet und über Schalteranschlußklemmen (U3, V3, W3) mit den Sternpunktanschlußenden (U2, V2, W2) verbunden ist, daß diese bei einem Einschaltvorgang miteinander elektrisch verbindbar und bei einem Ausschaltvorgang voneinander trennbar sind, und
- mit einer Steuerschaltung (5), die zum Steuern des elektronischen Schalters (4) ausgebildet und mit diesem verbunden ist und die derart ausgebildet ist, daß auf ein externes Umschaltsignal hin der elektronische Schalter (4) einschaltbar ist,
- **dadurch gekennzeichnet daß** der elektronische Schalter in einem am Drehstrommotor angebrachten Klemmenkasten montiert ist,
- und durch mindestens einem zur Erfassung der Temperatur des elektronischen Schalters (4) ausgebildeten Temperaturfühler (T), der mit der Steuerschaltung (5) verbunden ist, wobei die Steuerschaltung (5) derart ausgebildet ist, daß der elektronische Schalter (4) nur dann eingeschaltet wird, wenn der Temperaturfühler (T) eine für den elektronischen Schalter (4) ungefährliche Temperatur erfaßt.

2. Drehstrommotor nach Anspruch 1,
**gekennzeichnet durch** mindestens einen weiteren Temperaturfühler, der zur Erfassung der Temperatur der Wicklung (2) an oder in dieser angebracht und mit der Steuerschaltung (5) derart verbunden ist, daß der elektronische Schalter (4) nur dann eingeschaltet wird, wenn der weitere Temperaturfühler eine für die Wicklung (2) ungefährliche Temperatur erfaßt.

3. Drehstrommotor nach Anspruch 1,
**dadurch gekennzeichnet, daß**
der elektronische Schalter (4) in einer wärmeleitenden Verbindung mit dem Klemmenkasten steht, wobei der Klemmenkasten aus einem wärmeleitenden Material gefertigt ist.

4. Drehstrommotor nach einem der vorhergehenden Ansprüche,
**dadurch gekennzeichnet, daß**
der elektronische Schalter (4) und der Temperaturfühler (T) vorzugsweise unter Zwischenschaltung eines Montagesubstrats (101) auf einer aus wärmeleitendem Material bestehenden Hybridplatine (103) montiert sind.

5. Drehstrommotor nach einem der Ansprüche 1 - 4,
**dadurch gekennzeichnet, daß**
die Steuerschaltung (5) mit einer Meßeinrichtung (6) verbunden ist, die mit den Schalteranschlußklemmen (U3, V3, W3) verbunden ist und die dort anliegende Sternpunkt-Spannungen abgreift, wobei die Steuerschaltung (5) derart ausgebildet ist, daß die Ein- und Ausschaltvorgänge in Abhängigkeit von den Sternpunkt-Spannungen steuerbar sind.

6. Drehstrommotor nach Anspruch 5,
**dadurch gekennzeichnet, daß**
die Steuerschaltung (5) derart ausgebildet ist, daß auf ein externes Einschaltsignal hin der elektronische Schalter (4) dann eingeschaltet wird, wenn gleichzeitig eine der Sternpunkt-Spannungen eine erste Schwellenspannung überschreitet, die höher ist als eine Restspannung zwischen den Schalteranschlußklemmen (U3, V3, W3) im eingeschalteten Zustand des Schalters (4), jedoch wesentlich niedriger ist als die Spannung des Drehstromnetzes.

7. Drehstrommotor nach Anspruch 6,
**dadurch gekennzeichnet, daß**
die erste Schwellenspannung 2 bis 5%, vorzugsweise 3%, der Spannung des Drehstromnetzes beträgt.

8. Drehstrommotor nach einem der Ansprüche 1 bis 7,
**dadurch gekennzeichnet, daß**
die Steuerschaltung (5), insbesondere zum Schutz gegen Überspannungen, derart ausgebildet ist, daß der Schalter (4) dann eingeschaltet bzw. ausgeschaltet wird, wenn eine der Sternpunkt-Spannungen eine zweite Schwellenspannung überschreitet bzw. unterschreitet, die höher als die Spannung des Drehstromnetzes, jedoch niedriger als eine Schädigungsspannung ist, oberhalb derer Bauteile des Schalters (4) oder der Steuerschaltung (5) geschädigt oder zerstört werden.

9. Drehstrommotor nach einem der Ansprüche 1 bis 8,
**dadurch gekennzeichnet, daß**
der elektronische Schalter (4) eine Energieversorgungseinrichtung (8) aufweist, welche den elektronischen Schalter (4) mit Schalt- oder Zündenergie versorgt und derart ausgebildet und den elektronischen Schalter (4) überbrückend angeordnet ist, daß die im eingeschalteten Zustand des elektronischen Schalters (4) über dessen Anschlußklemmen anliegende Restspannung als versorgungsspannung für die Energieversorgungseinrichtung (8) verwendbar ist.

10. Drehstrommotor nach einem der Ansprüche 1 bis 9, der zusätzlich mit einer elektromagnetisch betätigbaren mechanischen Bremse ausgerüstet ist, welche durch Bestromen einer Erregerspule der Bremse gelöst bzw. gelüftet wird,
**dadurch gekennzeichnet, daß**
eine Versorgungsspannung für die Erregerspule an den Enden eines der Wicklungsstränge (2u, 2v, 2w) abgegriffen wird.

## Claims

1. Three-phase alternating current motor for operation on a three-phase network (1),
- with three winding phases (2u, 2v, 2w) or groups of winding phases to form a winding (2) in a star connection, ends of neutral terminals (U2, V2, W2) of the winding phases (2u, 2v, 2w) being accessible outside the winding (2),
- with an electronic switch (4), which is in such a form and connected via switch connecting terminals (U3, V3, W3) to the ends of neutral terminals (U2, V2, W2) in such a way that at a switching-on event these can be connected electrically to each other and at a switching-off event they can be disconnected from each other, and
- with a control circuit (5), which is in a form to control the electronic switch (4), and is connected to it, and is in such a form that the electronic switch (4) can be switched on at an external switching signal,
**characterized in that**
- the electronic switch is fitted in a terminal box which is attached to the three-phase alternating current motor,
- and by at least one temperature sensor (T) which is in a form to sense the temperature of the electronic switch (4), and which is connected to the control circuit (5), the control circuit (5) being in such a form that the electronic switch (4) is switched on only when the temperature sensor (T) senses a temperature which is not dangerous for the electronic switch (4).

2. Three-phase alternating current motor according to Claim 1,
**characterized by** at least one further temperature sensor, which is attached on or in the winding (2) to sense its temperature, and is connected to the control circuit (5) in such a way that the electronic switch (4) is switched on only when the further temperature sensor senses a temperature which is not dangerous for the winding (2).

3. Three-phase alternating current motor according to Claim 1,
**characterized in that** the electronic switch (4) is in a heat-conducting connection with the terminal box, the terminal box being manufactured from a heat-conducting material.

4. Three-phase alternating current motor according to one of the preceding claims,
**characterized in that** the electronic switch (4) and the temperature sensor (T) are mounted on a hybrid board (103) consisting of a heat-conducting material, preferably with an assembly substrate (101) connected between them.

5. Three-phase alternating current motor according to one of Claims 1 to 4,
**characterized in that** the control circuit (5) is connected to a measuring device (6), which is connected to the switch connecting terminals (U3, V3, W3) and taps the neutral point voltages which are present there, the control circuit (5) being in such a form that the switching-on and switching-off events can be controlled depending on the neutral point voltages.

6. Three-phase alternating current motor according to Claim 5,
**characterized in that** the control circuit (5) is in such a form that on an external switch-on signal the electronic switch (4) is switched on if simultaneously one of the neutral point voltages exceeds a first threshold voltage, which is higher than a residual voltage between the switch connecting terminals (U3, V3, W3) in the switched-on state of the switch (4), but significantly lower than the voltage of the three-phase network.

7. Three-phase alternating current motor according to Claim 6,
**characterized in that** the first threshold voltage is 2 to 5%, preferably 3%, of the voltage of the three-phase network.

8. Three-phase alternating current motor according to one of Claims 1 to 7,
**characterized in that** the control circuit (5), particularly for protection from overvoltages, is in such a form that the switch (4) is switched on or off if one of the neutral point voltages overshoots or undershoots respectively a second threshold voltage, which is higher than the voltage of the three-phase network, but lower than a damage voltage, above which components of the switch (4) or the control circuit (5) are damaged or destroyed.

9. Three-phase alternating current motor according to one of Claims 1 to 8,
**characterized in that** the electronic switch (4) has a power supply device (8), which supplies switching or ignition power to the electronic switch (4), and is in such a form, and arranged to short-circuit the electronic switch (4) in such a way, that the residual voltage which is present in the switched-on state of the electronic switch (4) via its connecting terminals can be used as the supply voltage for the power supply device (8).

10. Three-phase alternating current motor according to one of Claims 1 to 9, additionally equipped with an electromagnetically operable mechanical brake which is released by current passing through an excitation coil of the brake,
**characterized in that** a supply voltage for the excitation coil is tapped at the ends of one of the winding phases (2u, 2v, 2w).

## Revendications

1. Moteur à courant triphasé destiné à fonctionner sur un réseau triphasé (1),
- comportant trois lignes d'enroulement (2u, 2v, 2w) ou groupe de lignes d'enroulement pour former un enroulement (2) en montage en étoile, des points extrémités de l'étoile (U2, V2, W2) des lignes d'enroulement (2u, 2v, 2w) étant accessibles à l'extérieur de l'enroulement (2),
- comportant un interrupteur électronique (4) qui est conçu et relié, par des bornes d'interrupteur (U3, V3, W3) aux points extrémités de l'étoile (U2, V2, W2), de façon que celles-ci puissent être reliées entre elles électriquement lors d'une opération de mise en marche et séparées les unes des autres lors d'une opération de mise à l'arrêt, et
- comportant un circuit de commande (5) qui est conçu pour la commande de l'interrupteur électronique (4) et est relié à celui-ci et qui est conçu de manière que l'interrupteur électronique (4) puisse être mis en service à la suite d'un signal de commutation externe,
**caractérisé en ce que**
- l'interrupteur électronique est monté dans une boîte à bornes placé sur le moteur triphasé,
- et par au moins une sonde de température (T), conçue pour détecter la température de l'interrupteur électronique (4) et qui est reliée au circuit de commande (5), le circuit de commande (5) étant conçu de manière que l'interrupteur électronique (4) ne soit mis en marche que si la sonde de température (T) détecte une température sans risque pour l'interrupteur électronique (4).

2. Moteur à courant triphasé selon la revendication 1,
**caractérisé par** au moins une autre sonde de température qui, pour détecter la température de l'enroulement (2), est placée sur ou dans celui-ci et est reliée au circuit de commande (5) de manière que l'interrupteur électronique (4) ne soit mis en marche que si l'autre sonde de température détecte une température sans risque pour l'enroulement (2).

3. Moteur à courant triphasé selon la revendication 1,
**caractérisé en ce que** l'interrupteur électronique (4) est en liaison thermiquement conductrice avec la boîte à bornes, la boîte à bornes étant fabriquée dans un matériau thermiquement conducteur.

4. Moteur à courant triphasé selon l'une des revendications précédentes,
**caractérisé en ce que** l'interrupteur électronique (4) et la sonde de température (T) sont montés, de préférence avec interposition d'un substrat de montage (101), sur une platine hybride (103) en un matériau thermiquement conducteur.

5. Moteur à courant triphasé selon l'une des revendications 1 à 4,
**caractérisé en ce que** le circuit de commande (5) est relié à un dispositif de mesure (6) qui est relié aux bornes de connexion de l'interrupteur (U3, V3, W3) et prélève les tensions étoilées qui s'y appliquent, le circuit de commande (5) étant conçu de manière que les opérations de mise en marche et de mise à l'arrêt puissent être commandées en fonction des tensions étoilées.

6. Moteur à courant triphasé selon la revendication 5,
**caractérisé en ce que** le circuit de commande (5) est conçu de manière qu'à la suite d'un signal d'enclenchement externe, l'interrupteur électronique (4) soit mis en marche si en même temps l'une des tensions étoilées dépasse une première tension de seuil qui est supérieure à une tension résiduelle entre les bornes de connexion de l'interrupteur (U3, V3, W3) à l'état enclenché de l'interrupteur (4), mais sensiblement inférieure à la tension du réseau triphasé.

7. Moteur à courant triphasé selon la revendication 6,
**caractérisé en ce que** la première tension de seuil représente de 2 à 5 %, de préférence 3 %, de la tension du réseau triphasé.

8. Moteur à courant triphasé selon l'une des revendications 1 à 7,
**caractérisé en ce que** le circuit de commande (5), en particulier pour la protection contre les surtensions, est conçu de manière que l'interrupteur (4) soit mis en marche ou à l'arrêt lorsque l'une des tensions étoilées dépasse ou sous-dépasse une deuxième tension de seuil qui est supérieure à la tension du réseau triphasé, mais inférieure à une tension dommageable au-dessus de laquelle des composants de l'interrupteur (4) ou du circuit de commande (5) sont endommagés ou détruits.

9. Moteur à courant triphasé selon l'une des revendications 1 à 8,
**caractérisé en ce que** l'interrupteur électronique (4) comporte un dispositif d'alimentation en énergie (8) qui alimente l'interrupteur électronique (4) avec une énergie de commande ou d'allumage et est conçu et disposé de manière à ponter l'interrupteur électronique (4), de façon qu'à l'état enclenché de l'interrupteur électronique (4), la tension résiduelle, s'appliquant par ses bornes de connexion, puisse être utilisée comme tension d'alimentation pour le dispositif d'alimentation en énergie (8).

10. Moteur à courant triphasé selon l'une des revendications 1 à 9 qui est équipé en outre d'un frein mécanique à actionnement électromagnétique, lequel est desserré ou relevé lorsqu'une bobine d'excitation du frein est parcourue par un courant,
**caractérisé en ce qu'**une tension d'alimentation pour la bobine d'excitation est prélevée aux extrémités de l'une des lignes d'enroulement (2u, 2v, 2w).
